# EUROPÄISCHE PATENTANMELDUNG

(11) **EP 2 028 404 A2**
(43) Veröffentlichungstag der Anmeldung: **25.02.2009**
(21) Anmeldenummer: 08162695.4
(22) Anmeldetag: 20.08.2008
(51) Int. Cl.: F16L 37/084, F16L 37/086, F16L 37/091, F16L 37/56, F15B 13/08

(54) **Steckanschlussvorrichtung für eine pneumatische Druckleitung**

(30) Priorität: 23.08.2007 DE 102007040003
(71) Anmelder: Robert Bosch GmbH, 70442 Stuttgart (DE)
(72) Erfinder: Varlet, Manuel, 74960, Cran Gevrier (FR)
(74) Vertreter: Kietzmann, Lutz

(57) **Zusammenfassung**

Steckanschlussvorrichtung für eine pneumatische Druckleitung (3) mit einer in einem Gehäuse (1) ausgebildeten Anschlussöffnung (2) zur Aufnahme eines Endes der Druckleitung (3), welche mit einem federnd gelagerten blechzungenartigen Verbindungselement (4) zum lösbaren Festklemmen der Druckleitung (3) in der Anschlussöffnung (2) zusammenwirkt, wobei das blechzungenartige Verbindungselement (4) derart am Gehäuse (1) gelagert ist, dass dieses im unbetätigten Zustand auf die Druckleitung (3) quer zur Längsachse eine Klemmkraft ausübt, welche im betätigten Zustand durch Überwindung der Federkraft aufhebbar ist.

## Beschreibung

Die vorliegende Erfindung betrifft eine Steckanschlussvorrichtung für eine pneumatische Druckleitung mit einer in einem Gehäuse ausgebildeten Anschlussöffnung zur Aufnahme eines Endes der Druckleitung, welche mit einem federnd gelagerten blechzungenartigen Verbindungselement zum lösbaren Festklemmen der Druckleitung in der Anschlussöffnung zusammenwirkt. Ferner betrifft die Erfindung auch ein Pneumatikaggregat mit einer derartigen Steckanschlussvorrichtung.

Das Einsatzgebiet der vorliegenden Erfindung erstreckt sich vornehmlich auf Pneumatikaggregate, wie Ventile, die meist in der Antriebs- und Steuertechnik zur Anwendung kommen, um Druckluftflüsse innerhalb von Automatisierungssystemen zu steuern. Typische Beispiele von Ventilen sind Wege-, Sperr-, Strom- und sonstige Sonderventile. Daneben erstreckt sich das Einsatzgebiet der Erfindung auch auf andere Pneumatikaggregate, wie Zylinder, Drehantriebe und dergleichen, welche über Druckluft angetrieben werden, um eine mechanische Kraft zu erzeugen. Derartige Pneumatikaggregate sind untereinander über Druckleitungen verbunden, welche die Druckluft transportieren. Die Druckleitungen im Pneumatikbereich bestehen meist aus Kunststoffrohren, welche über Steckanschlussvorrichtungen lösbar an Pneumatikaggregate angekoppelt werden.

Aus der DE 102 50 593 A1 geht eine gattungsgemäße Steckanschlussvorrichtung hervor. Diese ist zum Anschluss einer Druckleitung an einem Ventil als Pneumatikaggregat vorgesehen und besteht im Wesentlichen aus einem im Bereich der Anschlussöffnung des Ventils angeordneten blechfederartigen Verbindungselement sowie einer zu der Anschlussöffnung fluchtend korrespondierenden benachbarten Aufnahmeöffnung für die Druckleitung. Der Winkel zwischen der Querschnittsfläche der Aufnahmeöffnung und der Querschnittsfläche der Anschlussöffnung ist bei Betätigen des blechzungenartigen Verbindungselements veränderbar, um ein Verklemmen oder ein Lösen des Endes der Druckleitung zu realisieren. Das hier verwendete blechzungenartige Verbindungselement ist mit einem ersten, nicht federnden Bereich neben der Anschlussöffnung durch Einstecken in eine korrespondierende Ausnehmung mit dem Gehäuse ortsfest verbunden und weist einen zweiten, federnden Bereich auf, der aus Federblech hergestellt ist. Zwar ermöglicht diese technische Lösung insbesondere bei beengten Platzverhältnissen eine zuverlässige Ankoppelung einer Druckleitung an ein Pneumatikaggregat, jedoch gestaltet sich die Betätigung des Verbindungselements recht umständlich, da die Betätigungskraft in der Achse der Druckleitung liegt.

Es ist daher die Aufgabe der vorliegenden Erfindung, eine Steckanschlussvorrichtung für eine pneumatische Druckleitung zu schaffen, welche sich durch eine bauraumsparende Anordnung sowie einfache Betätigung auszeichnet.

Die Aufgabe wird ausgehend von einer Steckanschlussvorrichtung für eine pneumatische Druckleitung gemäß dem Oberbegriff von Anspruch 1 in Verbindung mit dessen kennzeichnenden Merkmalen gelöst. Die nachfolgenden abhängige Ansprüche geben vorteilhafte Weiterbildungen der Erfindung wieder.

Die Erfindung schließt die technische Lehre ein, dass das blechzungenartige Verbindungselement derart am Gehäuse gelagert ist, dass dieses im unbetätigten Zustand auf die Druckleitung quer zur Längsachse eine Klemmkraft ausübt, welche im betätigen Zustand durch Überwindung einer Federkraft aufhebbar ist.

Der Vorteil der erfindungsgemäßen Lösung liegt insbesondere darin, dass durch die Klemmwirkung in Querrichtung zur Längsachse der Druckleitung auch die Betätigungskraft für das Verbindungselement in diese Richtung auszuüben ist. Hierdurch lässt sich die Steckanschlussvorrichtung einfacher handhaben. Das erfindungsgemäße Verbindungselement stellt ein funktionsintegriertes Bauteil dar, so dass sich die erfindungsgemäße Lösung durch weniger Einzelteile platzsparend realisieren lässt.

Vorzugsweise weist das Verbindungselement einen Federbereich zur Erzeugung der erforderlichen Federkraft auf. Das Verbindungselement ist über eine sich direkt hieran anschließende Druckfläche auch manuell betätigbar. Insofern kann ein separater Betätigungsmechanismus entfallen und das Verbindungselement selbst erzeugt auch die für die Klemmkraft erforderliche Federwirkung, so dass separate Federelemente ebenfalls entbehrlich sind.

Das Gehäuse weist im Bereich der Anschlussöffnung vorzugsweise eine Aussparung zum Halten des Verbindungselements auf. Diese Aussparung hält das Verbindungselement am Gehäuse, wenn keine Druckleitung an der Anschlussöffnung angeschlossen ist. Somit können vergleichsweise aufwendigere Fixierelemente, wie Schrauben und dergleichen, entfallen.

Gemäß einer weiteren, die Erfindung verbessernde Maßnahme wird vorgeschlagen, das Verbindungselement entlang der Betätigungsrichtung über ein am Gehäuse angebrachtes Deckelelement zu führen, welches eine zur Anschlussöffnung fluchtende Öffnung zur Führung der Druckleitung aufweist. Somit entsteht die Klemmwirkung durch das Verbindungselement dadurch, dass dieses die Druckleitung gegen die Wandung der Öffnung im Deckelelement sowie der Anschlussöffnung im Gehäuse drückt. Die Anbringung des Verbindungselements am Gehäuse kann beispielsweise über eine Klippverbindung erfolgen. Weiterhin ist es auch möglich, das Deckelelement mit separaten Befestigungsmitteln am Gehäuse zu befestigen, und zwar nachdem das erfindungsgemäße Verbindungselement montiert wurde.

Zur Verbesserung der Abdichtung der Druckleitung gegenüber der Anschlussöffnung kann seitens des Deckelelements oder im Bereich der Anschlussöffnung ein O-Ring eingesetzt werden, der innenradial dichtend an der Außenoberfläche der Druckleitung zur Anlage kommt.

Zur Verbesserung der Halteeigenschaften der erfindungsgemäßen Steckanschlussvorrichtung wird vorgeschlagen, dass das Verbindungselement an der für das Hindurchstecken der Druckleitung vorgesehen Öffnung mit radial nach innen gerichteten Krallen ausgerüstet ist. Diese Krallen kommen in das relativ weiche Kunststoffmaterial der Druckleitung zwecks Klemmen zum Eingriff. Hierbei ist es ausreichend, wenn sich diese Krallen nur über einen Teil des Umfangs der Öffnung im Verbindungselement erstrecken, und zwar an der Stelle, an welcher das Verbindungselement mit der Druckleitung in Kontakt kommt. Vorteilhafterweise sollten die Krallen widerhakenartig in Richtung der Anschlussöffnung also nach gehäuseinnen verlaufend ausgerichtet sein. Hierdurch wird ein ungewolltes Lösen einer Druckleitung aus der Anschlussöffnung zusätzlich erschwert.

Im Rahmen der vorliegenden Erfindung ist es auch denkbar, ein einziges Verbindungselement mit mehreren Öffnungen zum Anschluss von entsprechend mehreren Druckleitungen auszustatten. Entsprechenderweise müsste das Gehäuse dann auch mehrere Anschlussöffnungen aufweisen und das Deckelelement ist baulich an diese Mehrfachanordnung anzupassen. Durch diese Maßnahme können mehrere Druckleitungen gleichzeitig an einem Gehäuse angeschlossen werden oder hiervon gelöst werden, in dem nur ein einziges Verbindungselement betätigt werden muss.

Weitere, die Erfindung verbessernde Maßnahmen werden nachstehend gemeinsam mit der Beschreibung bevorzugter Ausführungsbeispiele anhand der Figuren näher dargestellt. Es zeigt:
- Fig.1: eine perspektivische Darstellung im Teilschnitt einer Steckanschlussvorrichtung in einer ersten Ausführungsform,
- Fig.2: eine perspektivische Ansicht eines Deckelelements für die Steckanschlussvorrichtung nach Figur 1,
- Fig.3: eine perspektivische Ansicht eines Verbindungselements für die Steckanschlussvorrichtung gemäß Figur 1,
- Fig.4: eine perspektivische Ansicht im Teilschnitt einer Steckanschlussvorrichtung in einer zweiten Ausführungsform.

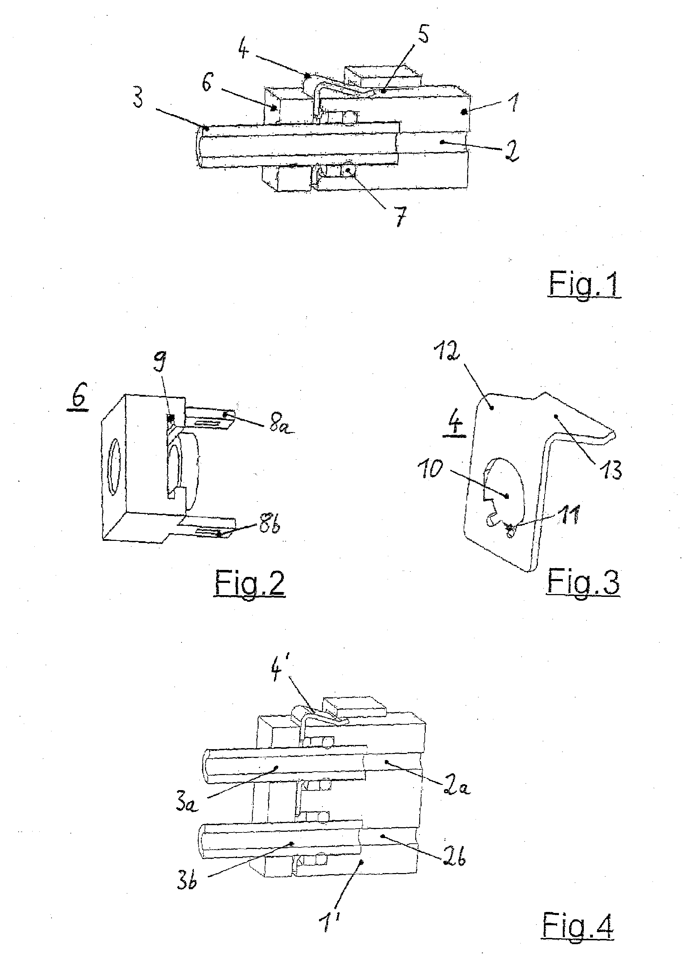

Gemäß Fig.1 besitzt ein Gehäuse 1 eines - nicht näher dargestellten - Pneumatikaggregats eine Anschlussöffnung 2 zur Aufnahme des Endes einer Druckleitung 3.

Die Druckleitung 3 wird über ein blechzungenartiges Verbindungselement 4 innerhalb der Anschlussöffnung 2 gehalten. Das Verbindungselement 4 ist am Gehäuse 1 gelagert und übt im dargestellten unbetätigten Zustand quer zur Längsachse der Druckleitung 3 eine Klemmkraft aus. Zum Halten des Verbindungselements 4 ist seitens des Gehäuses 1 eine Aussparung 5 vorgesehen. Entlang der Betätigungsrichtung wird das Verbindungselement 4 über ein Deckelelement 6 geführt. Das Deckelelement 6 ist lösbar am Gehäuse 1 angebracht und besitzt eine zur Anschlussöffnung 2 fluchtende Öffnung, durch welche die Druckleitung 3 von außen her eingeführt wird. Zur Abdichtung gegenüber der Druckleitung 3 ist seitens des Gehäuses 1 in die Anschlussöffnung 2 ein O-Ring 7 eingesetzt. Durch Drücken auf das Verbindungselement 4 an der nach außen hin freiliegenden Stelle wird die Klemmkraft aufgehoben und die Druckleitung 3 lässt sich aus der Anschlussöffnung 2 herausziehen.

Gemäß Fig.2 weist das hier dargestellte Deckelelement 6 schenkelartige Anformungen 8a, 8b auf, mit welchen das Deckelelement 6 per Klippverbindung am - nicht weiter dargestellten - Gehäuse 1 lösbar befestigt ist. Eine Gleitführung 9 dient der Führung des - ebenfalls nicht weiter dargestellten - Verbindungselements 4 entlang seiner Betätigungsrichtung.

Nach Fig.3 ist das hier dargestellte Verbindungselement 4 im Wesentlichen winkelförmig gebogen und weist eine Öffnung 10 zur Hindurchführung der - hier nicht weiter dargestellten - Druckleitung 3 auf. Zum Eingriff in das Kunststoffmaterial der Druckleitung 4 ist die Öffnung 10 mit nach radial innen gerichteten Krallen 11 versehen, welche nur über den Teil des Umfangs der Öffnung 10 verteilt angeordnet sind, welcher klemmend mit der Druckleitung 3 in Kontakt kommt. Das Verbindungselement 4 weist ferner einen Federbereich 12 zur Erzeugung der Federkraft auf, der hier im Bereich der abgewinkelten Stelle vorgesehen ist. Über eine sich hieran anschließende Druckfläche 13 erfolgt die manuelle Betätigung des Verbindungselements 4 der Federkraft.

Gemäß Fig.4 kann ein Gehäuse 1' auch mehrere Anschlussöffnungen 2a und 2b aufweisen, denen jeweils eine eigene Druckleitung 3a bzw. 3b zugeordnet ist. Über ein einziges Verbindungselement 4' lassen sich beide Druckleitungen 3a und 3b gemeinsam festklemmen.

Die Erfindung ist nicht beschränkt auf die beiden vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, mehr als zwei Anschlussöffnungen mit der erfindungsgemäßen Lösung über ein einziges Verbindungselement als gleichzeitig betätigbare Steckanschlüsse auszubilden.

### Bezugszeichenliste

- **1**: Gehäuse
- **2**: Anschlussöffnung
- **3**: Druckleitung
- **4**: Verbindungselement
- **5**: Aussparung
- **6**: Deckelelement
- **7**: O-Ring
- **8**: Verbindungsschenkel
- **9**: Spaltführung
- **10**: Öffnung
- **11**: Krallen
- **12**: Federbereich
- **13**: Druckfläche

## Patentansprüche

1. Steckanschlussvorrichtung für eine pneumatische Druckleitung (3) mit einer in einem Gehäuse (1) ausgebildeten Anschlussöffnung (2) zur Aufnahme eines Endes der Druckleitung (3), welche mit einem federnd gelagerten blechzungenartigen Verbindungselement (4) zum lösbaren Festklemmen der Druckleitung (3) in der Anschlussöffnung (2) zusammenwirkt,
**dadurch gekennzeichnet, dass** das blechzungenartige Verbindungselement (4) derart am Gehäuse (1) gelagert ist, dass dieses im unbetätigten Zustand auf die Druckleitung (3) quer zur Längsachse eine Klemmkraft ausübt, welche im betätigten Zustand durch Überwindung der Federkraft aufhebbar ist.

2. Steckanschlussvorrichtung nach Anspruch 1,
**dadurch gekennzeichnet, dass** das Verbindungselement (4) einen Federbereich (12) zur Erzeugung der Federkraft aufweist, und dass das Verbindungselement (4) über eine sich hieran anschließende Druckfläche (13) manuell betätigbar ist.

3. Steckanschlussvorrichtung nach Anspruch 1,
**dadurch gekennzeichnet, dass** das Gehäuse (1) eine Aussparung (5) zum Halten des Verbindungselements (4) aufweist.

4. Steckanschlussvorrichtung nach Anspruch 1,
**dadurch gekennzeichnet, dass** das Verbindungselement (4) entlang der Betätigungsrichtung über ein Deckelelement (6) geführt ist, das am Gehäuse (1) angebracht ist, und das eine zur Anschlussöffnung (2) fluchtende Öffnung zur Führung der Druckleitung (3) aufweist.

5. Steckanschlussvorrichtung nach Anspruch 1 oder 4,
**dadurch gekennzeichnet, dass** zur Abdichtung gegenüber der Druckleitung (3) im Deckelelement (6) oder in der Anschlussöffnung (2) ein O-Ring (7) eingesetzt ist.

6. Steckanschlussvorrichtung nach Anspruch 1,
**dadurch gekennzeichnet, dass** mindestens eine zum Hindurchstecken der Druckleitung (3) im Verbindungselement (4) vorgesehene Öffnung (10) mit nach radial Innen gerichteten Krallen (11) zum Eingriff in das Kunststoffmaterial der Druckleitung (3) versehen ist.

7. Steckanschlussvorrichtung nach Anspruch 6,
**dadurch gekennzeichnet, dass** die Krallen (11) sich nur über den Teil des Umfangs der Öffnung (10) im Verbindungselement (4) erstrecken, die klemmend mit der Druckleitung (3) in Kontakt kommen.

8. Steckanschlussvorrichtung nach Anspruch 6,
**dadurch gekennzeichnet, dass** die Krallen (11) widerhakenartig in Richtung der Anschlussöffnung (2) verlaufend ausgerichtet sind.

9. Steckanschlussvorrichtung nach Anspruch 1,
**dadurch gekennzeichnet, dass** das Verbindungselement () mehrere Öffnungen (,) zum Anschluss von entsprechend mehreren Druckleitungen (;) aufweist.

10. Pneumatikaggregat mit einer Anschlussöffnung (2) zur Verbindung mit einer Druckleitung (3), welche mit einer Steckanschlussvorrichtung gemäß einem der vorstehenden Ansprüche ausgestattet ist.
